(19) Europäisches Patentamt
European Patent Office
Office européen des brevets

(11) **EP 2 302 768 B1**

(12) **FASCICULE DE BREVET EUROPEEN**

(45) Date de publication et mention
de la délivrance du brevet:
**19.02.2020 Bulletin 2020/08**

(51) Int Cl.:
***H02K 19/38*** *(2006.01)*

(21) Numéro de dépôt: **10306043.0**

(22) Date de dépôt: **28.09.2010**

(54) **Dispositif d'alimentation en courant continu d'un bobinage de rotor d'une machine tournante électrique synchrone, et système d'entraînement comportant un tel dispositif d'alimentation**

Vorrichtung zur Gleichstromversorgung einer Rotorspulenanordnung einer synchron umlaufenden elektrischen Maschine, und Antriebssystem, das mit solch einer Einspeisvorrichtung ausgestattet ist

Device for supplying direct current to a rotor coil of a synchronous electric rotating machine and drive system comprising such a supply device

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **28.09.2009 FR 0956691**

(43) Date de publication de la demande:
**30.03.2011 Bulletin 2011/13**

(73) Titulaire: **GE Energy Power Conversion Technology Limited**
**Rugby**
**Warwickshire CV21 1BU (GB)**

(72) Inventeur: **Youma, Hado**
**54000, NANCY (FR)**

(74) Mandataire: **Serjeants LLP**
**Dock**
**75 Exploration Drive**
**Leicester, LE4 5NU (GB)**

(56) Documents cités:
EP-A2- 1 708 342     DE-B- 1 223 941
FR-A- 1 495 635     FR-A- 1 541 530
FR-A1- 2 140 581     FR-A1- 2 523 380
FR-A1- 2 808 933

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 302 768 B1

**Description**

DE 1223941 décrit un dispositif d'alimentation en courant continu d'un bobinage de rotor d'une machine tournante électrique synchrone selon le préambule de la revendication 1.

EP 1708342 décrit un rotor d'une machine excitatrice sans balai synchrone, destinée à l'excitation de générateurs synchrones.

La présente invention concerne un dispositif d'alimentation en courant continu d'un bobinage de rotor d'une machine tournante électrique synchrone, du type comprenant :

- une alimentation d'entrée (26) étant un onduleur de tension apte à délivrer un courant alternatif polyphasé,
- une excitatrice (20) comportant un stator (24) relié électriquement à l'alimentation d'entrée (26), et un rotor (28) muni d'un bobinage (30),
- un redresseur (22) relié électriquement en sortie du bobinage (30) du rotor (28) de l'excitatrice (20) pour l'alimentation du rotor (16) de la machine synchrone (12),
- l'excitatrice (20) étant une machine électrique asynchrone propre à délivrer au redresseur (22) un courant alternatif de sortie comportant q phases, le nombre q de phases du courant de sortie de l'excitatrice (20) est égal à 7 ou 9, de préférence égal à 7, et
- dans lequel le rotor (28) de l'excitatrice (20) comporte un corps cylindrique (31) et Ne encoches de réception du bobinage (30), les Ne encoches étant agencées dans le corps cylindrique (31), dans lequel chaque bobine (32) du bobinage comporte au moins une spire électriquement conductrice, les spires étant agencées dans les encoches suivant un mode ondulé et selon un pas d'enroulement (Yc), et dans lequel le nombre d'encoches (Ne) et le pas d'enroulement (Yc) sont des nombres entiers et premiers entre eux.

La présente invention concerne également un système d'entraînement comportant un tel dispositif d'alimentation et une machine tournante électrique synchrone.

En particulier, l'invention s'applique à des dispositifs d'alimentation de puissance élevée, typiquement comprise entre 5 et 100 MW, dans lesquels l'excitatrice évolue à des vitesses pouvant atteindre jusqu'à 4500 tours par minute. De tels dispositifs d'alimentation et de tels systèmes d'entraînement sont typiquement installés dans des plates-formes pétrolières. Plus généralement encore, ces dispositifs d'alimentation et ces systèmes d'entraînement sont principalement destinés aux applications gazières, pétrolières, qu'elles soient sur terre, en mer, ou encore sous-marine.

Dans une machine électrique tournante synchrone, lorsque le rotor comporte des enroulements, ces derniers sont alimentés par un courant continu. Le courant continu est fourni par un redresseur couplé à une excitatrice. L'excitatrice est une machine électrique tournante ayant fonction de transformateur à partir d'un courant électrique triphasé. Le redresseur comporte un pont de diodes apte à générer un courant continu à partir du courant alternatif délivré par l'excitatrice.

Pour alimenter en courant continu le rotor de la machine synchrone, il est connu d'utiliser un dispositif d'alimentation comportant une excitatrice asynchrone délivrant un courant de sortie triphasé et un redresseur connecté en sortie de l'excitatrice asynchrone. La vitesse de rotation du rotor d'une machine tournante électrique synchrone alimenté par ce dispositif d'alimentation est alors variable.

Cependant, la fiabilité de cette solution s'avère particulièrement dépendante de la fiabilité des diodes composant le redresseur, puisque la défaillance d'une seule diode entraîne le dysfonctionnement du dispositif d'alimentation, et par conséquent du système d'entraînement.

Pour améliorer la fiabilité du dispositif d'alimentation, il est encore connu d'utiliser un dispositif d'alimentation comportant une excitatrice délivrant un courant de sortie alternatif comportant plus de trois phases et un redresseur connecté en sortie de l'excitatrice. Cependant, la mise en oeuvre d'un tel dispositif étant délicate, l'excitatrice de ce dispositif d'alimentation est systématiquement une excitatrice synchrone, et la vitesse de rotation du rotor de la machine synchrone alimenté par ce dispositif d'alimentation est alors fixe.

L'invention a pour but de proposer un dispositif d'alimentation permettant d'offrir une meilleure fiabilité, ainsi qu'une vitesse de rotation variable pour le rotor de la machine synchrone alimenté par le dispositif d'alimentation.

Suivant d'autres modes de réalisation, le dispositif d'alimentation comprend une ou plusieurs des caractéristiques suivantes, prises isolément ou suivant toutes les combinaisons techniquement possibles :

- le bobinage du rotor de l'excitatrice est propre à former une pluralité de pôles magnétiques lorsqu'il est parcouru par un courant, le nombre P de pôles magnétiques étant un nombre pair, de préférence égal à 2 ou 4, de préférence encore égal à 4 ;
- le bobinage du rotor de l'excitatrice comporte une pluralité de bobines connectées entre elles en polygone ;
- le redresseur comporte une première et une deuxième bornes de sortie et un pont de diodes comprenant q branches connectées en parallèle entre les première et deuxième bornes de sortie, chaque branche comportant une première diode et une deuxième diode ;
- l'anode de la première diode est connectée à une borne de sortie de l'excitatrice correspondant à une phase respective, la cathode de la première diode étant connectée à la première borne de sortie du redresseur, et la cathode de la deuxième diode est connectée à ladite borne de sortie de l'excitatrice correspondant à la phase respective, l'anode de la deuxième diode étant connectée à la deuxième borne de sortie du redresseur ;
- le redresseur comporte en outre, pour chaque diode, un fusible connecté en série entre la diode et la borne de sortie correspondante de l'excitatrice ; et
- le rotor de l'excitatrice présente une inductance de fuite de valeur prédéterminée, de sorte qu'au moins quatre diodes du redresseur sont propres à être simultanément en état de conduction.

L'invention a également pour objet un système d'entraînement comportant une machine tournante électrique synchrone et un dispositif d'alimentation en courant continu d'un bobinage du rotor de la machine électrique synchrone, caractérisé en ce que le dispositif d'alimentation est tel que défini ci-dessus.

Suivant un autre mode de réalisation, le système d'entraînement comprend la caractéristique suivante :

- le rotor de la machine synchrone et le rotor de l'excitatrice sont solidaires d'un arbre commun.

Ces caractéristiques et avantages de l'invention apparaîtront à la lecture de la description qui va suivre, donnée uniquement à titre d'exemple, et faite en référence aux dessins annexés, sur lesquels :

- la figure 1 est une représentation schématique d'un système d'entraînement comportant un dispositif d'alimentation selon l'invention ;
- les figures 2A et 2B sont des schémas électriques d'un bobinage du rotor d'une excitatrice et d'un redresseur du dispositif d'alimentation de la figure 1, l'excitatrice délivrant un courant de sortie à 7 phases et comportant respectivement 2 pôles et 4 pôles, au rotor ;

- la figure 3 est un organigramme représentant un procédé de dimensionnement de caractéristiques électriques du dispositif d'alimentation ;
- la figure 4 est un schéma illustrant le principe de commutation via le redresseur d'une phase à une autre phase de l'excitatrice de la figure 2A ;
- les figures 5A, 5B, 5C sont des ensembles de courbes schématiques illustrant les commutations du redresseur de la figure 2B en fonction du temps, pour un angle de commutation $\mu$ respectivement égal à 0, compris entre 0 et $\pi/7$, et compris entre $\pi/7$ et $2\pi/7$;
- la figure 6 est un ensemble de courbes illustrant la tension redressée Ud en fonction de l'inductance de fuite au rotor de l'excitatrice pour différentes valeurs du nombre de phases du courant de sortie de l'excitatrice et du nombre de pôles magnétiques du rotor de l'excitatrice ;
- la figure 7 est une vue analogue à celle de la figure 6, en cas de court-circuit d'une diode du redresseur ;
- la figure 8 est une courbe représentant l'intensité Id du courant redressé en fonction du temps, en cas de court-circuit d'une diode du redresseur ;
- la figure 9 est une vue analogue à celle de la figure 2A selon un deuxième mode de réalisation de l'invention ; et
- la figure 10 une vue analogue à celle de la figure 2A selon un troisième mode de réalisation de l'invention.

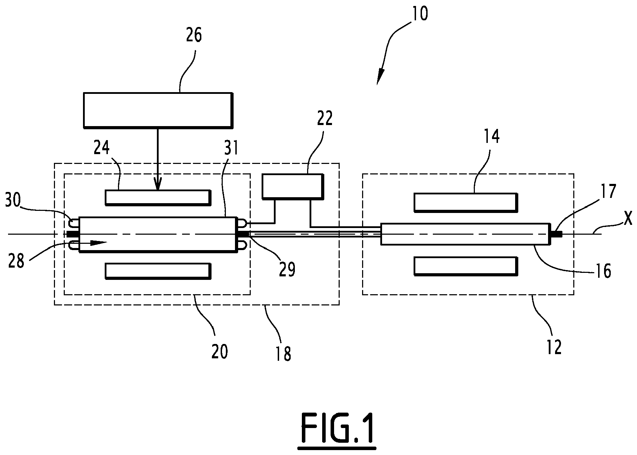

Sur la figure 1, un système d'entraînement 10 comprend une machine tournante électrique synchrone 12, comportant un stator 14 et un rotor 16 solidaire d'un arbre 17 d'axe X, et un dispositif 18 d'alimentation en courant continu d'un bobinage du rotor 16 de la machine synchrone.

Le dispositif d'alimentation 18 comprend une excitatrice 20 et un redresseur 22.

L'excitatrice 20 est une machine électrique asynchrone propre à délivrer au redresseur 22 un courant de sortie alternatif de tension variable et comportant une pluralité q de phases. Selon l'invention, le nombre q de phases du courant de sortie de l'excitatrice 20 est strictement supérieur à 3. Le nombre q est de préférence un nombre impair. Le nombre q est de préférence encore supérieur ou égal à 7, par exemple égal à 7 ou 9.

L'excitatrice 20 comporte un stator 24 relié électriquement à une alimentation d'entrée 26, et un rotor 28 solidaire d'un arbre 29 et muni d'un bobinage 30.

Le redresseur 22 est connecté électriquement entre le rotor 28 de l'excitatrice et le rotor 16 de la machine synchrone. Le redresseur est propre à convertir le courant alternatif issu du rotor 28 de l'excitatrice en un courant continu et à délivré ledit courant continu, également appelé courant d'excitation, au rotor 16 de la machine synchrone.

Le redresseur 22 est, par exemple, un pont de diodes. En variante, le redresseur 22 est un pont de thyristors.

Le stator 24 comporte un bobinage non représenté et est propre à induire un courant induit au rotor 28 lorsqu'il est alimenté par l'alimentation 26. Autrement dit, le stator 24 est l'inducteur, et le rotor 28 est l'induit.

L'alimentation d'entrée 26 est un onduleur de tension apte à délivrer un courant alternatif polyphasé. L'onduleur de tension 26 est capable de délivrer une tension variable au stator 24 de l'excitatrice, en particulier de faire croître progressivement la tension délivrée au stator 24 pour obtenir un couple de démarrage à vitesse nulle. Le courant alternatif polyphasé délivré par l'onduleur de tension 26 est, par exemple, un courant triphasé ayant une tension de 400 V et une fréquence fixe de 50 Hz.

Le rotor 28 comprend un corps cylindrique 31 solidaire de l'arbre 29, l'arbre 29 et le corps cylindrique 31 ayant le même axe. Une pluralité Ne d'encoches, non représentées, est agencée dans le corps cylindrique 31 selon la direction axiale, les encoches s'ouvrant sur la surface cylindrique du corps 31. Le bobinage 30 est disposé dans la pluralité Ne d'encoches.

Le rotor 28 présente une inductance de fuite Lf, également appelée inductance de fuite rotorique.

Dans l'exemple de réalisation de la figure 1, l'arbre 29 du rotor de l'excitatrice est confondu avec l'arbre 17 de la machine synchrone. Les diodes du redresseur 22 sont agencées sur la périphérie de l'arbre 29, et la liaison électrique entre la sortie du redresseur 22 et le rotor 16 de la machine synchrone est réalisée via des câbles fixés directement sur l'arbre commun aux rotors de l'excitatrice 20 et de la machine synchrone 12.

En variante, l'arbre de l'excitatrice et l'arbre de la machine synchrone sont d'axes distincts. La liaison électrique entre la sortie du redresseur et le rotor de la machine synchrone est alors réalisée via un système à balais et collecteurs.

La vitesse de rotation du rotor 28 de l'excitatrice est comprise entre 0 et environ 4500 tours par minute. L'intensité du courant d'excitation délivré au rotor 16 de la machine synchrone par le dispositif d'alimentation 18 est fonction de la vitesse de rotation du rotor 28 de l'excitatrice. L'intensité nominale du courant d'excitation est sensiblement égale à 1300 A pour une vitesse rotorique de l'excitatrice égale à 4000 tours par minute, l'intensité dudit courant d'excitation étant sensiblement égale à 900 A pour une vitesse rotorique comprise entre 0 et 800 tours par minute, et à 1200 A pour une vitesse rotorique comprise entre 4200 et 4500 tours par minute.

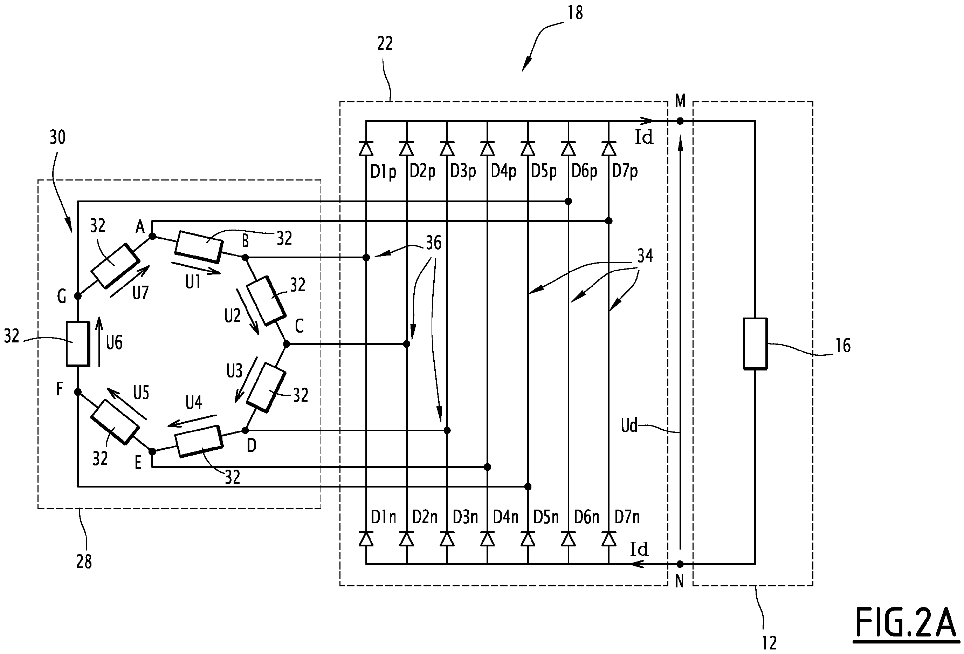

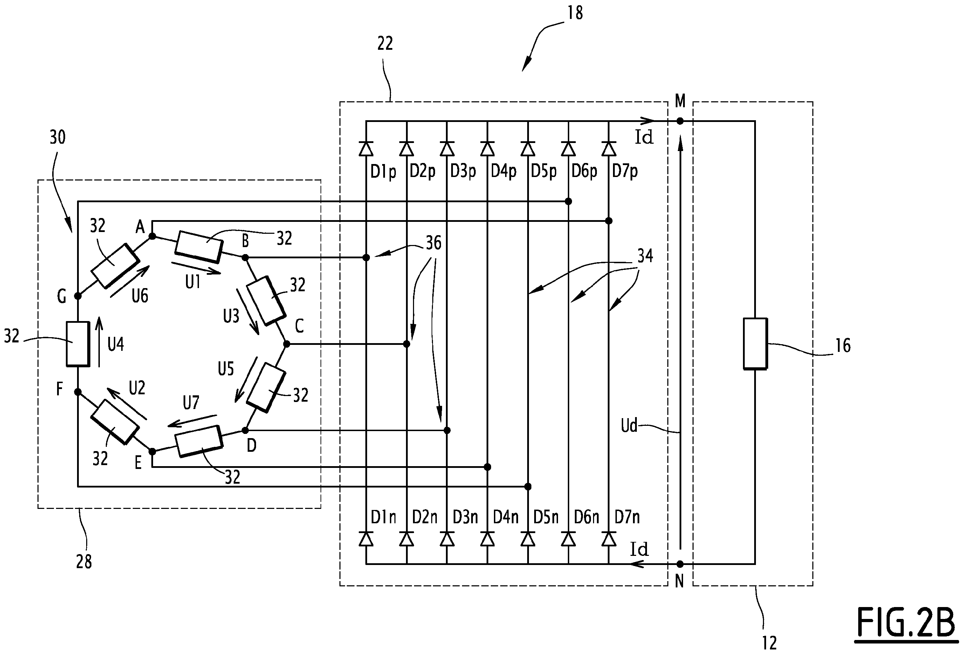

Sur les figures 2A et 2B, le bobinage 30 du rotor 28 de l'excitatrice comporte une pluralité de bobines 32 connectées entre elles en polygone. Le nombre de bobines 32 du rotor de l'excitatrice est égal au nombre q de phases du courant de sortie de l'excitatrice 20, chaque phase correspondant à une bobine respective. Les bobines 32 sont agencées de manière concentrique autour de l'axe de l'arbre 29. Chaque bobine 32 comporte au moins une spire électriquement conductrice, les spires étant logées dans les encoches selon un pas d'enroulement Yc.

Les spires des q phases sont agencées dans un même ordre d'une encoche à une autre encoche depuis l'axe de l'arbre 29 vers l'extérieur du corps cylindrique 31, les spires des différentes phases n'étant pas nécessairement logées dans chaque encoche. Ce mode d'agencement des spires dans les encoches est également appelé mode ondulé.

En variante, les spires des q phases sont agencées selon un ordre distinct d'une encoche à une autre encoche depuis l'axe de l'arbre 29 vers l'extérieur du corps cylindrique 31. Ce mode d'agencement des spires dans les encoches est également appelé mode imbriqué.

Dans l'exemple de réalisation des figures 2A et 2B, le nombre q de phases est égal à 7, et le bobinage en polygone 30 comporte sept bobines 32 reliées en série et séparées par des bornes A, B, C, D, E, F, G de connexion au redresseur 22. Chacune des q phases est propre à être délivrée en une borne de connexion A, B, C, D, E, F, G respective.

Le bobinage 30 du rotor est propre à former une pluralité de pôles magnétiques, lorsqu'il est parcouru le courant induit par le stator 24. Le nombre P de pôles magnétiques du rotor 28 est un nombre pair, de préférence égal à 2, 4 ou 8. P est de préférence encore égal à 4.

Le redresseur 22 est connecté au bobinage 30 et comporte une première borne de sortie M et une deuxième borne de sortie N, chacune étant connectée à une borne respective du rotor 16 de la machine synchrone. Le redresseur 22 comporte un premier groupe de diodes D1p, D2p, D3p, D4p, D5p, D6p, D7p, également appelées diodes positives, et un deuxième groupe de diodes D1n, D2n, D3n, D4n, D5n, D6n, D7n, également appelées diodes négatives. L'anode de chaque diode D1p, D2p, D3p, D4p, D5p, D6p, D7p du premier groupe est connectée à une borne de connexion A, B, C, D, E, F, G respective, et la cathode de chaque diode D1p, D2p, D3p, D4p, D5p, D6p, D7p du premier groupe est connectée à la première borne de sortie M. La cathode de chaque diode D1n, D2n, D3n, D4n, D5n, D6n, D7n du deuxième groupe est connecté à une borne de connexion A, B, C, D, E, F, G respective, et l'anode de chaque diode D1n, D2n, D3n, D4n, D5n, D6n, D7n du deuxième groupe à la deuxième borne de sortie N.

Autrement dit, le redresseur 22 comporte q branches 34, chaque branche 34 comportant une diode Dip du premier groupe et une diode Din du deuxième groupe en série, i étant compris entre 1 et q, chaque diode Dip, Din étant connectée entre une borne de sortie M, N et une borne de connexion A, B, C, D, E, F, G respectives.

Chaque diode Dip, Din est, par exemple, une diode en forme de galette, destinée à être montée dans un ensemble à empilement pressé et généralement désignée sous le nom de diode « press-pack ».

La tension entre chaque paire de bornes A, B, C, D, E, F, G est une tension composée U1, U2, U3, U4, U5, U6, U7. Autrement dit, chaque tension composée U1, U2, U3, U4, U5, U6, U7 est la tension entre deux phases respectives du courant de sortie de l'excitatrice 20.

Les tensions composées $U_j$ de courant polyphasé sont décalées régulièrement de $2\pi/q$, et sont exprimées à l'aide de l'équation suivante :

$$U_j = U\sqrt{2}.\sin(\omega.t - \frac{(1-j).2\pi}{q}) \qquad (1)$$

où U représente le module de la tension entre les phases, $\omega$ représente une pulsation, et t représente le temps.

La tension nominale du courant d'excitation entre les bornes de sortie N et M du redresseur, également appelée tension nominale redressée $Ud_{polygone}$, est alors calculée à l'aide de l'équation suivante :

$$Ud_{polygone} = \frac{q}{\pi} U\sqrt{2} \qquad (2)$$

L'intensité du courant d'excitation est également appelée intensité redressée Id.

Dans l'exemple de réalisation de la figure 2A, le nombre P de pôles magnétiques du rotor 28 est égal à 2, et les bobines 32 du rotor sont connectées en un polygone direct. Plus précisément, la bobine 32 de la 1ère phase est connectée à celle de la 2ème phase, la bobine 32 de la 2ème phase est connectée à celle de la 3ème phase, et ainsi de suite jusqu'à la connexion de la bobine 32 de la 7ème phase à celle de la 1ère phase. Cette connexion en polygône direct est représentée sur la figure 2A par la succession U1, U2, U3, U4, U5, U6, U7 des tensions composées, l'indice de la tension composée représentant le numéro d'ordre de la phase associée.

Dans l'exemple de réalisation de la figure 2B, le nombre P de pôles magnétiques du rotor 28 est égal à 4, et les bobines 32 du rotor sont connectées en un polygone croisé. Plus précisément, les bobines 32 sont connectées de la manière suivante : celle de la 1ère phase à celle de la 3eme phase, celle de la 3ème phase à celle de la 5ème phase, celle de la 5ème phase à celle de la 7ème phase, celle de la 7ème phase à celle de la 2ème phase, celle de la 2ème phase à celle de la 4ème phase, celle de la 4ème phase à celle de la 6ème phase, et enfin celle de la 6ème phase à celle de la 1ère phase. Cette connexion en polygone croisé est représentée sur la figure 2B par la succession U1, U3, U5, U7, U2, U4, U6 des tensions composées, l'indice de la tension composée représentant le numéro d'ordre de la phase associée.

Dans le cas non représenté d'un bobinage 30 à 9 phase et 2 pôles, les bobines 32 du rotor sont connectées en un polygone direct, de manière analogue à celui de la figure 2A, correspondant à une succession U1, U2, U3, U4, U5, U6, U7, U8, U9 des tensions composées.

Dans le cas non représenté d'un bobinage 30 à 9 phase et 4 pôles, les bobines 32 du rotor sont connectées en un polygone croisé, de manière analogue à celui de la figure 2B, correspondant à une succession U1, U3, U5, U7, U9, U2, U4, U6, U8 des tensions composées.

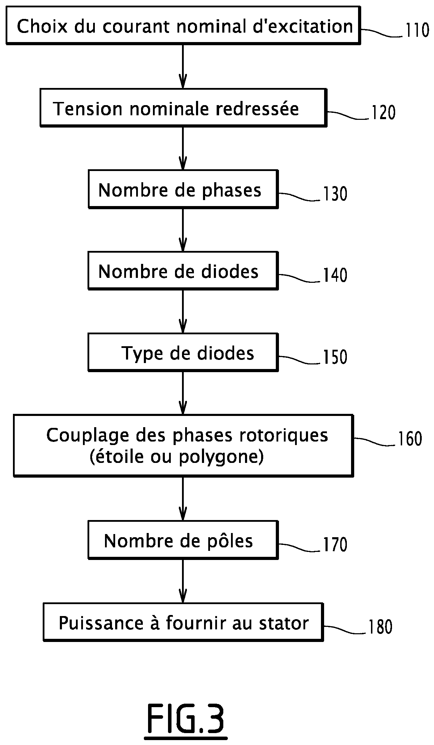

La figure 3 illustre un organigramme des étapes d'un procédé de dimensionnement du dispositif d'alimentation 18.

Dans une première étape 110, la valeur de l'intensité nominale du courant d'excitation est choisie en fonction d'exigences relatives à la machine tournante synchrone 12. L'intensité nominale du courant d'excitation est, par exemple, choisie sensiblement égale à 1300 A.

La valeur de l'intensité nominale du courant d'excitation, ainsi que les valeurs prédéterminées de la résistance et de l'inductance du rotor 16 de la machine synchrone, permettent de calculer, lors de la deuxième étape 120 et à l'aide de la loi d'Ohm, la valeur de la tension nominale du courant d'excitation en sortie du redresseur 22, également appelée tension nominale redressée.

Le choix du nombre q de phases du courant de sortie de l'excitatrice 20, effectué lors de la troisième étape 130, est un compromis entre une amélioration des performances électriques et de la fiabilité d'une part, et des contraintes de réalisation et d'encombrement du bobinage 30 de l'excitatrice.

En effet, plus le nombre q de phases est important, et plus la tension redressée Ud est élevée d'après l'équation (2), de sorte qu'un grand nombre de phases permet de délivrer une puissance élevée au rotor 16 de la machine synchrone. De même, un nombre important de phases entraîne une amélioration de la fiabilité, le fonctionnement du dispositif d'alimentation 18 étant meilleur en mode dégradé, comme par exemple dans le cas d'une diode en court-circuit. Cependant, un nombre important de phases rend la réalisation du bobinage 30 plus complexe et entraîne une augmentation de l'encombrement du rotor 28 de l'excitatrice.

En outre, le nombre q est choisi impair, afin d'augmenter le nombre de portions de sinusoïdes par période de la tension redressée Ud, également appelé indice de pulsation p. En effet, si q est un nombre pair, alors p est égal à q, et si q est un nombre impair, alors p est égal à 2q. L'augmentation de l'indice de pulsation permet de réduire le taux d'ondulation de la tension redressée.

Le nombre q étant strictement supérieur à 3 selon l'invention, il est ainsi choisi égal à 5, 7 ou 9, de préférence égal à 7 ou 9.

Le nombre de diodes utilisées dans le redresseur 22 est déterminé, à la quatrième étape 140, en fonction du nombre q de phases calculé à l'étape 130 précédente. Pour chaque phase, une branche 34 respective comporte une diode du premier groupe et une diode du deuxième groupe, et le nombre de diodes est donc égal à 2xq.

En variante, chaque branche respective comporte D diodes en parallèle à la place de chaque diode du premier ou du deuxième groupe, afin de limiter la puissance aux bornes de chaque diode. Le nombre de diodes est alors égal à 2xqxD.

Le type des diodes utilisées Dip, Din dans le redresseur 22 est ensuite choisi lors de la cinquième étape 150, en fonction notamment de l'encombrement disponible pour l'ensemble des diodes Dip, Din, du mode de connexion des diodes Dip, Din au bobinage 30 du rotor de l'excitatrice, et d'un courant et d'une tension $V_{diode\_max}$ admissible par chaque diode Dip, Din. Le courant et la tension $V_{diode\_max}$ admissibles par chaque diode dépendent de la tension efficace par phase du rotor 28 de l'excitatrice, du courant nominal d'excitation, ainsi que du nombre P de pôles magnétiques du rotor 28 de l'excitatrice.

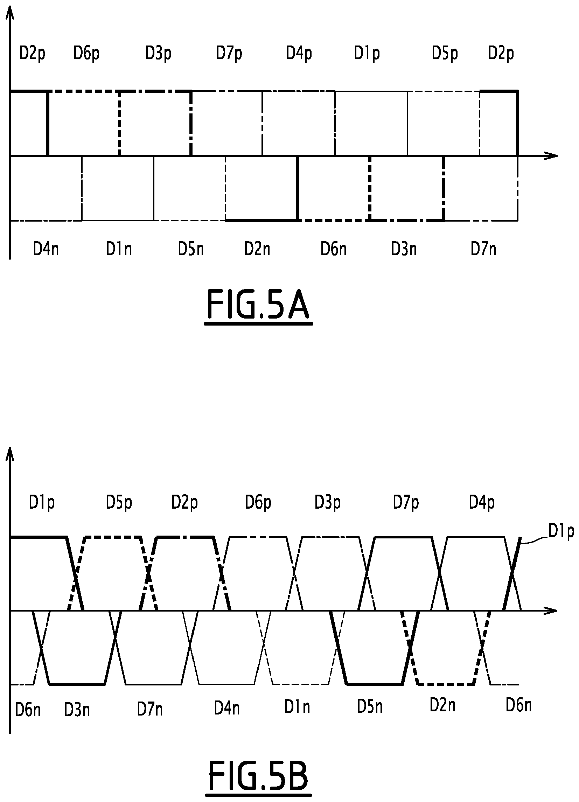

Le courant admissible par chaque diode Dip, Din est supérieur ou égal au courant redressé divisé par le nombre minimal de diodes de conduction simultanée. Ce nombre minimal de diodes de conduction simultanée est égal à 2, comme décrit dans la suite de la description pour les figures 5A à 5C.

Lorsque le nombre P de pôles magnétiques est égal à 2, la tension admissible $V_{diode\_max}$ par chaque diode Dip, Din à l'état ouvert est déterminé à l'aide des équations suivantes :

$$V_{diode\_max} = \frac{U\sqrt{2}}{2\sin\left(\frac{\pi}{2q}\right)},$$

si le nombre q de phases est impair, et

$$V_{diode\_max} = \frac{U\sqrt{2}}{\sin\left(\frac{\pi}{2q}\right)},$$

si le nombre q de phases est pair.

Lorsque le nombre P de pôles magnétiques est égal à 4, la tension admissible $V_{diode\_max}$ par chaque diode Dip, Din à l'état ouvert est sensiblement égale à la tension maximale du courant en sortie de l'excitatrice 20.

En fonction du type d'enroulement, à savoir imbriqué ou ondulé, du bobinage 30 du rotor de l'excitatrice, le mode de couplage des bobines 32 du rotor de l'excitatrice, à savoir en étoile ou en polygone, est choisi lors de l'étape suivante 160. Les bobines 32 sont de préférence couplées en polygone, afin de limiter le nombre de connexions électriques pour l'excitatrice 20 et le redresseur 22.

Pour la détermination du nombre P de pôles magnétiques du rotor 28 de l'excitatrice lors de l'étape 170, un tableau contenant des valeurs du pas d'enroulement Yc est calculé en fonction du nombre q de phases, du nombre Ne d'encoches et du nombre P de pôles. Les valeurs calculées du pas d'enroulement Yc ne sont pas nécessairement des nombres entiers. Une première condition nécessaire pour la réalisation du bobinage 30 est alors que le pas d'enroulement Yc soit un nombre entier.

Lorsque les spires du bobinage 30 sont agencées suivant le mode imbriqué dans les encoches, seule la première condition doit être vérifiée, et les valeurs possibles du nombre P de pôles sont celles vérifiant cette première condition.

Lorsque les spires du bobinage 30 sont agencées suivant le mode ondulé dans les encoches, une seconde condition, à savoir que le nombre d'encoches Ne et le pas d'enroulement Yc doivent être premiers entre eux. Les valeurs possibles du nombre P de pôles sont celles vérifiant les première et seconde conditions.

P est alors de préférence égal à 2 ou 4.

La puissance électrique à fournir par l'alimentation 26 au stator 24 de l'excitatrice est enfin calculée à l'étape 180 en fonction de la puissance à fournir au rotor 16 de la machine synchrone, cette puissance étant égale au produit de la tension Ud et de l'intensité Id du courant redressé déterminés précédemment, et du rendement du dispositif d'alimentation 18.

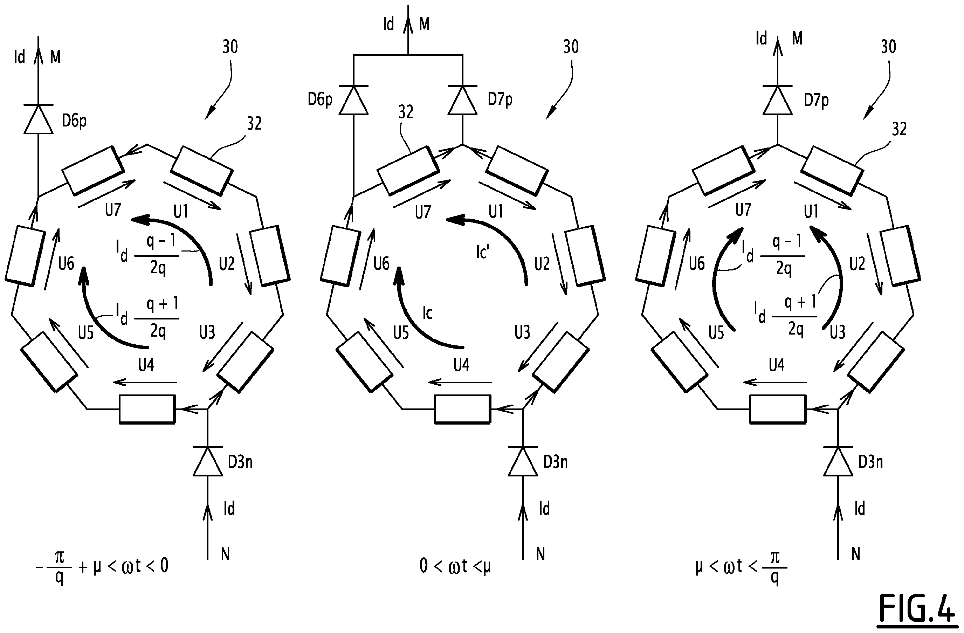

Le fonctionnement du système d'entraînement 10 et de son dispositif d'alimentation 18 va désormais être expliqué à l'aide des figures 4 à 8.

L'excitatrice 20 du dispositif d'alimentation est une excitatrice asynchrone et permet ainsi d'obtenir une vitesse de rotation variable pour la machine synchrone 12. En effet, l'excitatrice asynchrone fonctionne comme un transformateur propre à faire varier le flux tournant délivré au rotor 16 de la machine synchrone.

Lorsque l'excitatrice est au contraire une excitatrice synchrone, le courant redressé délivré au rotor de la machine synchrone dépend exclusivement de la vitesse de rotation de l'excitatrice synchrone. Si le système d'entraînement est à l'arrêt, l'excitatrice synchrone ne peut fournir aucun courant.

Ainsi, seule une excitatrice asynchrone 20 selon l'invention permet de fournir un courant avec une vitesse rotorique variable pour la machine synchrone 12, la vitesse rotorique variant entre une vitesse nulle et la vitesse nominale.

La commutation via le redresseur 22 du courant d'excitation d'une phase du rotor 28 de l'excitatrice à une autre phase n'est pas instantanée de par la valeur non nulle d'une inductance de commutation Lc. La valeur de cette inductance de commutation Lc est fonction de l'inductance de fuite Lf du rotor 28 de l'excitatrice et du nombre de P de pôles, le nombre P de pôles imposant un ordre de connexion des phases comme illustré précédemment avec les figures 2A et 2B.

Pour P égal à 2, l'inductance de commutation Lc est égale à l'inductance de fuite Lf du rotor 28. Pour P égal à 4, l'inductance de commutation Lc est égale à 3 fois l'inductance de fuite Lf du rotor 28.

La figure 4 illustre la commutation de la 6$^{\text{ème}}$ phase à la 7$^{\text{ème}}$ phase pour le dispositif d'alimentation 18 de la figure 2A avec un rotor 28 à 7 phases et 2 pôles. La commutation passe par une période transitoire de commutation représentée par le schéma électrique du milieu sur la figure 4. Autrement dit, l'inductance de commutation Lc introduit un retard dans la commutation du courant d'une phase à une autre.

Pendant cette période transitoire de commutation, les phases en commutation sont réunies par l'intermédiaire de diodes positives, ou bien de diodes négatives respectives, et mettent en court-circuit une bobine 32, altérant les formes d'ondes de tensions à l'entrée du redresseur 22. Dans l'exemple de la figure 4, les 6$^{\text{ème}}$ et 7$^{\text{ème}}$ phases sont réunies via les diodes positives D6p et D7p. Cette altération correspond à la durée de la période transitoire de commutation et est traduite en un angle de commutation $\mu$. Plus l'inductance de commutation Lc est grande, plus l'angle de commutation $\mu$ sera important.

En dehors de la période transitoire, le courant redressé d'intensité Id se divise en un premier courant d'intensité Idx(q+1)/2q circulant dans une branche du bobinage en polygone 30 comportant (q-1)/2q bobines 32 et un deuxième courant d'intensité Idx(q-1)/2q circulant dans l'autre branche du bobinage en polygone 30 comportant (q+1)/2q bobines 32.

L'intensité du courant circulant dans la bobine 32 mise en court-circuit lors de la période transitoire est notée Ir. Pendant la période transitoire, lorsque ωt varie de 0 à $\mu$, l'intensité Ir varie de -Idx(q-1)/2q à Idx(q-1)/2q. En négligeant la résistance de la bobine 32 mise en court-circuit et en calculant de deux manières différentes la tension composée aux bornes de la bobine 32 mise en court-circuit, on obtient l'équation suivante :

$$Lc\frac{dIr}{dt} = U\sqrt{2}\sin(\omega t) \qquad (3),$$

d'où l'on déduit l'équation suivante permettant de calculer l'angle de commutation $\mu$ en fonction de l'inductance de commutation Lc :

$$1 - \cos(\mu) = \frac{Lc.\omega.Id}{U\sqrt{2}}\left(1 - \frac{1}{q}\right) \qquad (4)$$

Lors de la période transitoire, on a la relation suivante :

$$-U_7 - \frac{q-1}{2}Lc\frac{di_c}{dt} = -\frac{q-1}{2}Lc\frac{di'_c}{dt} \qquad (5)$$

d'où l'on déduit l'équation suivante :

$$(q-1)Lc\frac{di_c}{dt} = -U_7 = -U\sqrt{2}\sin(\omega t) \qquad (6)$$

La chute de tension redressée ΔUd est alors calculée à l'aide de l'équation suivante :

$$\Delta Ud = \frac{2q}{2\pi}.Lc.\omega.Id.(1-\frac{1}{q}) \qquad\qquad (7)$$

Ainsi, plus l'inductance de commutation Lc est élevée, plus la chute de tension redressée ΔUd en sortie du redresseur 22 est importante.

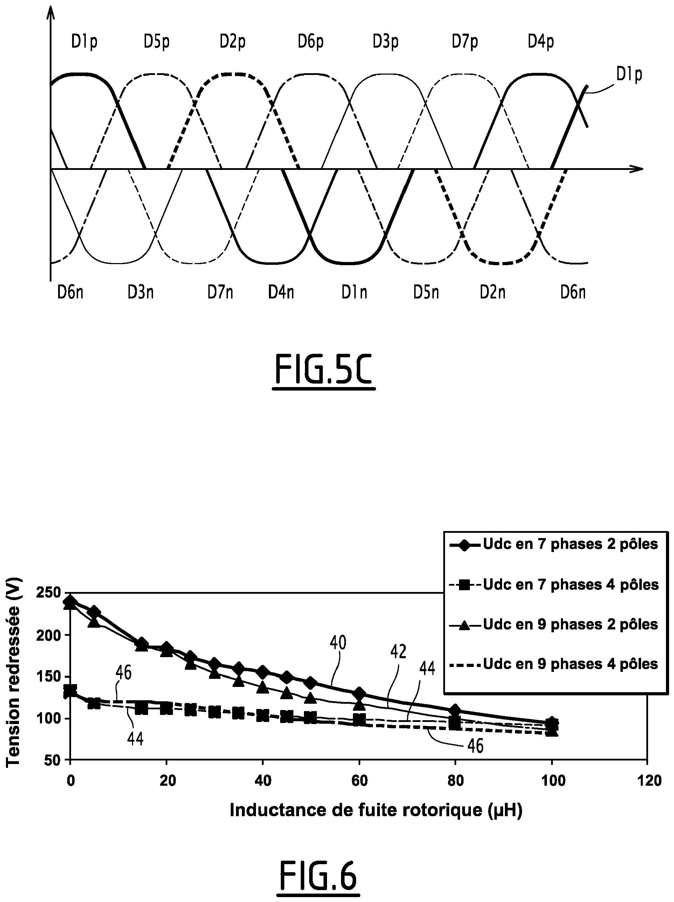

Les figures 5A, 5B, 5C illustrent les commutations en fonction du temps du redresseur de la figure 2B pour le dispositif d'alimentation 18 de la figure 2B avec un rotor 28 à 7 phases et 4 pôles, et pour un angle de commutation μ respectivement égal à 0, compris entre 0 et π/7, et compris entre π/7 et 2π/7. Les figures 5A, 5B, 5C sont un ensemble de courbes représentant les courants circulant dans les diodes respectives du redresseur 22 en fonction du temps.

Dans le cas théorique, représenté sur la figure 5A, où l'inductance de fuite Lf est nulle, l'angle de commutation μ est nul, et la commutation d'une phase à une autre phase ne comporte pas de période transitoire. Ainsi, seulement deux diodes, à savoir une diode positive Dip et une diode négative Din, sont toujours en conduction à tout instant.

Lorsque l'angle de commutation μ est compris entre 0 et π/7, comme représenté sur la figure 5B, deux diodes positives ou bien deux diodes négatives peuvent être simultanément conductrices lors d'une période transitoire de commutation correspondante. Lorsque deux diodes positives sont simultanément conductrices, seule une diode négative est conductrice, et inversement. Ainsi, lorsque l'angle de commutation μ est compris entre 0 et π/7, au minimum deux diodes et au maximum trois diodes sont en conduction à tout instant.

Lorsque l'angle de commutation μ est compris entre π/7 et 2π/7, comme représenté sur la figure 5C, deux diodes positives et deux diodes positives peuvent être simultanément conductrices lors d'une période transitoire de commutation correspondante. Ainsi, lorsque l'angle de commutation μ est compris entre π/7 et 2π/7, au minimum deux diodes et au maximum quatre diodes sont en conduction à tout instant.

L'homme du métier comprendra plus généralement que lorsque l'angle de commutation μ est compris entre 0 et π/q, q étant le nombre de phases, au minimum deux diodes et au maximum trois diodes sont en conduction à tout instant. Lorsque l'angle de commutation μ est compris entre π/q et 2π/q, au minimum deux diodes et au maximum quatre diodes sont en conduction à tout instant.

Ainsi, une augmentation de l'inductance de commutation Lc permet également d'améliorer la fiabilité du dispositif d'alimentation 18. En effet, le nombre de diodes en conduction augmente avec l'inductance de commutation Lc, et chaque diode est alors moins stressée, ce qui entraîne une amélioration de la fiabilité du dispositif d'alimentation 18.

Le choix de l'inductance de commutation implique un compromis entre l'amélioration de la fiabilité du dispositif d'alimentation 18 et la tension redressée Ud nécessaire pour alimenter la machine électrique synchrone 12. En effet, plus l'inductance de commutation Lc est élevée, plus la chute de tension redressée ΔUd en sortie du redresseur 22 est importante d'après l'équation (7).

La figure 6 est un ensemble de courbes 40, 42, 44, 46 représentant la tension redressée Ud en fonction de l'inductance de fuite rotorique Lf pour différentes valeurs des nombres q de phases et P de pôles. Les courbes 40, 42, 44, 46 correspondent à un rotor 28 avec respectivement 7 phases et 2 pôles, 9 phases et 2 pôles, 7 phases et 4 pôles, et 9 phases et 4 pôles.

Lorsque le nombre P de pôles est égal à 2, la tension redressée Ud est sensiblement plus importante jusqu'à une première valeur seuil de l'inductance de fuite rotorique Lf. En effet, la chute de tension redressée ΔUd augmente avec l'inductance de commutation Lc, et l'inductance de commutation Lc est égale à l'inductance de fuite rotorique Lf lorsque P est égal à 2, alors qu'elle est égale à 3 fois l'inductance de fuite rotorique Lf lorsque P est égal à 4.

En revanche, lorsque le nombre P de pôles est égal à 4, la tension redressée Ud sensiblement plus stable jusqu'à la première valeur seuil de l'inductance de fuite rotorique Lf.

La première valeur seuil de l'inductance de fuite rotorique Lf est sensiblement égale à 100 μH.

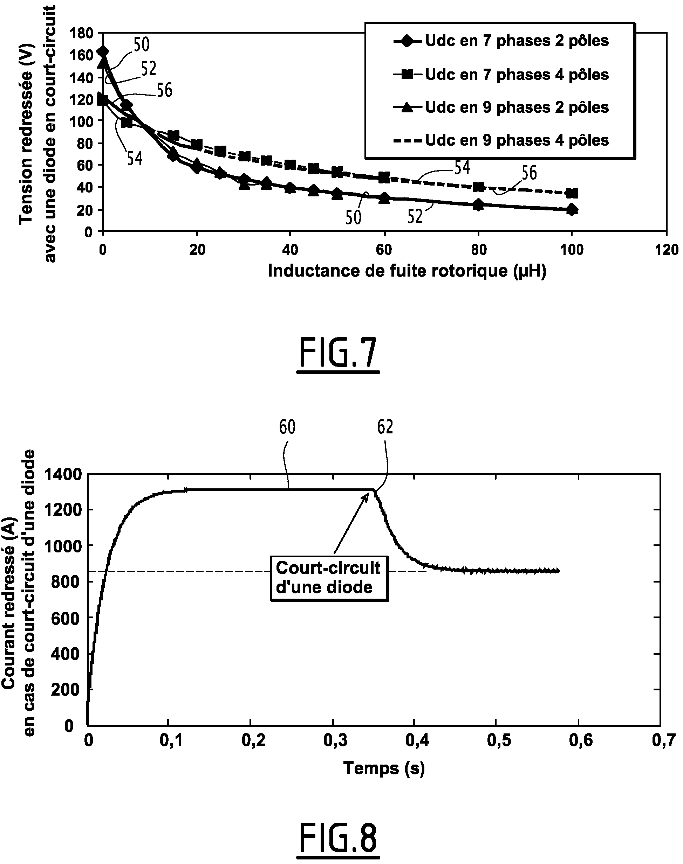

La figure 7 est un ensemble de courbes 50, 52, 54, 56 représentant la tension redressée Ud en fonction de l'inductance de fuite rotorique Lf pour différentes valeurs des nombres q de phases et P de pôles, en cas de défaillance d'une diode du redresseur, celle-ci étant en court-circuit permanent. Les courbes 50, 52, 54, 56 correspondent, de manière analogue à la figure 6, à un rotor 28 avec respectivement 7 phases et 2 pôles, 9 phases et 2 pôles, 7 phases et 4 pôles, et 9 phases et 4 pôles.

En cas de court-circuit d'une diode et à partir d'une deuxième valeur seuil de l'inductance de fuite rotorique Lf, la tension redressée Ud est plus importante avec 4 pôles au rotor de l'excitatrice qu'avec 2 pôles. La deuxième valeur seuil de l'inductance de fuite rotorique Lf est faible et sensiblement égale à 10 μH.

Ainsi, en mode dégradé avec une diode du redresseur en court-circuit permanent, il est préférable de choisir un nombre P de pôles égal à 4.

La figure 8 est une courbe 60 représentant l'intensité Id du courant redressé en fonction du temps, dans un mode dégradé analogue à celui de la figure 7, c'est-à-dire avec une diode du redresseur en court-circuit permanent. Le moment où la diode devient défaillante en conduisant de manière permanente correspond à un point d'inflexion 62 de la courbe 60. On observe que dans ce mode dégradé l'intensité Id du courant redressé est sensiblement égale à 875 A, la valeur nominale de l'intensité Id du courant redressé étant sensiblement égale à 1300 A. Ainsi, le dispositif d'alimentation 18 délivre en mode dégradé avec une diode en court-circuit un courant redressé dont l'intensité est égale à 60 % de sa valeur nominale.

On conçoit ainsi que l'invention permet de proposer un dispositif d'alimentation offrant une meilleure fiabilité, ainsi qu'une vitesse de rotation variable pour le rotor de la machine synchrone alimenté par ce dispositif d'alimentation.

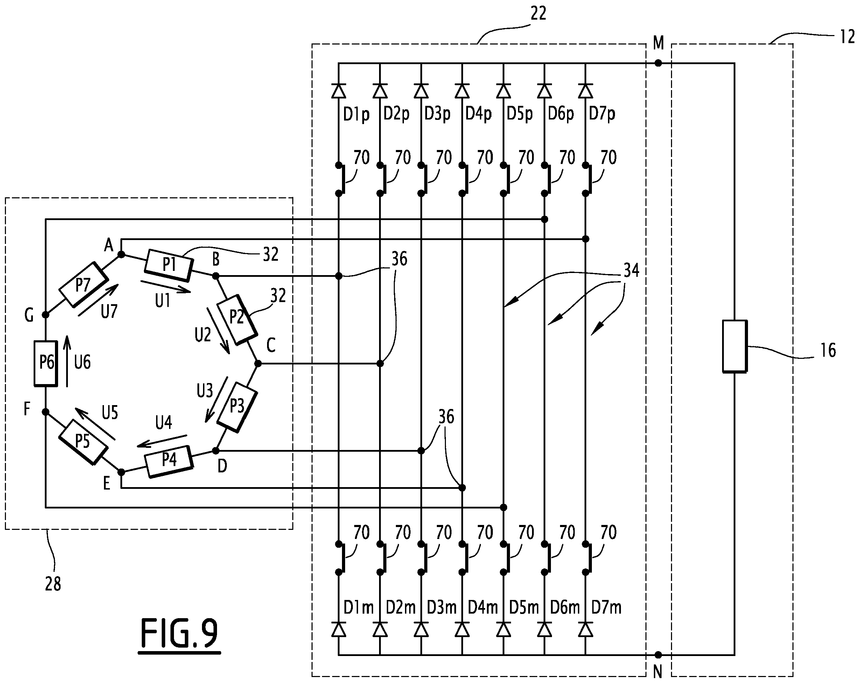

La figure 9 illustre un deuxième mode de réalisation de l'invention pour lequel les éléments analogues au premier mode de réalisation, décrit précédemment, sont repérés par des références identiques, et ne sont donc pas décrits à nouveau.

Selon le deuxième mode de réalisation, chaque diode Dip, Din du redresseur 22 est associé un fusible 70 connecté en série entre le point milieu 36 respectif et la diode Dip, Din correspondante. Le fusible 70 a pour fonction d'ouvrir le circuit en cas de défaillance de la diode Dip, Din à laquelle il est associé, la diode Dip, Din étant alors en court-circuit permanent.

Le fonctionnement de ce deuxième mode de réalisation est identique à celui du premier mode de réalisation, et n'est donc pas décrit à nouveau.

Les avantages de ce deuxième mode de réalisation comprennent ceux du premier mode de réalisation. Le deuxième mode de réalisation permet en outre, en cas de défaillance d'une diode en court-circuit permanent, de réduire la chute de tension redressée Ud associée à cette défaillance. Les fusibles 70 seront choisis avec une fiabilité supérieure à celle des diodes Dip, Din, en étant capable de supporter des conditions de fonctionnement et d'environnement comparables à celles des diodes Dip, Din.

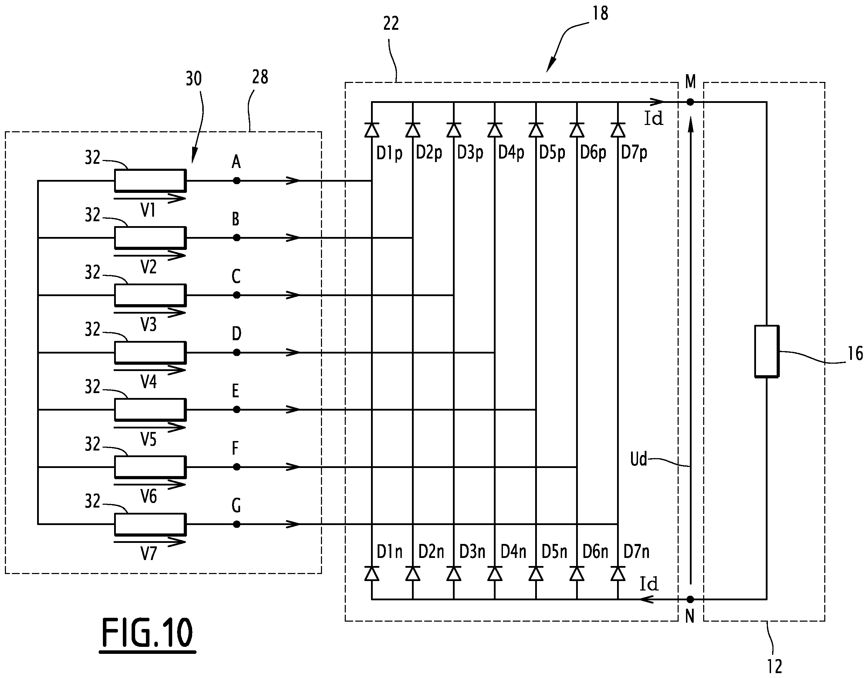

La figure 10 illustre un troisième mode de réalisation de l'invention pour lequel les éléments analogues au premier mode de réalisation, décrit précédemment, sont repérés par des références identiques, et ne sont donc pas décrits à nouveau.

Selon le troisième mode de réalisation, les bobines 32 du bobinage du rotor de l'excitatrice sont connectées entre elles en étoile. Le nombre de bobines 32 du rotor de l'excitatrice est égal au nombre q de phases du courant de sortie de l'excitatrice 20, chaque phase correspondant à une bobine respective.

La tension aux bornes de chaque bobine 32 est une tension simple V1, V2, V3, V4, V5, V6, V7. Autrement dit, chaque tension simple V1, V2, V3, V4, V5, V6, V7 est la tension entre une phase respective du courant de sortie de l'excitatrice 20 et le neutre non représenté.

Les tensions simples $V_j$ de courant polyphasé sont décalées régulièrement de $2\pi/q$, et sont exprimées à l'aide de l'équation suivante :

$$V_j = V.\sqrt{2}.\sin(\omega t - \frac{(1-j).2\pi}{q}), \qquad (8)$$

où V représente le module de la tension de chaque phase, $\omega$ représente une pulsation, et t représente le temps.

La tension nominale du courant d'excitation entre les bornes de sortie N et M du redresseur, également appelée tension nominale redressée $Vd_{polygone}$, est alors calculée à l'aide de l'équation suivante :

$$Ud_{étoile} = 2.\frac{q}{\pi}V.\sqrt{2}.\sin(\frac{\pi}{q}). \qquad (9)$$

Lorsque le nombre P de pôles magnétiques est égal à 2, la tension admissible $V_{diode\_max}$ par chaque diode Dip, Din à l'état ouvert est déterminé à l'aide des équations suivantes :

$$V_{diode\_max} = 2U\sqrt{2}\cos\left(\frac{\pi}{q}\right),$$

si le nombre q de phases est impair, et

$$V_{diode\_max} = 2U\sqrt{2},$$

si le nombre q de phases est pair, avec U représentant le module de la tension entre les phases.

Lorsque le nombre P de pôles magnétiques est égal à 4, la tension admissible $V_{diode\_max}$ par chaque diode Dip, Din à l'état ouvert est sensiblement égale à la tension maximale du courant en sortie de l'excitatrice 20.

Le fonctionnement de ce troisième mode de réalisation est analogue à la description de celui du premier mode de réalisation avec 2 pôles, quel que soit le nombre de pôles de l'excitatrice du troisième mode de réalisation, et n'est donc pas décrit à nouveau. Le fonctionnement du premier mode de réalisation avec 4 pôles n'est pas applicable au troisième mode de réalisation.

**Revendications**

1. Dispositif (18) d'alimentation en courant continu d'un bobinage de rotor (16) d'une machine tournante électrique synchrone (12), du type comprenant :

   - une excitatrice (20) comportant un stator (24) relié électriquement à l'alimentation d'entrée (26), et un rotor (28) muni d'un bobinage (30),
   - un redresseur (22) relié électriquement en sortie du bobinage (30) du rotor (28) de l'excitatrice (20) pour l'alimentation du rotor (16) de la machine synchrone (12),

   l'excitatrice (20) étant une machine électrique asynchrone propre à délivrer au redresseur (22) un courant alternatif de sortie comportant q phases,
   **caractérisé en ce que**
   une alimentation d'entrée (26) est un onduleur de tension apte à délivrer un courant alternatif polyphasé,
   le nombre q de phases du courant de sortie de l'excitatrice (20) est égal à 7 ou 9, de préférence égal à 7, et
   dans lequel le rotor (28) de l'excitatrice (20) comporte un corps cylindrique (31) et Ne encoches de réception du bobinage (30), les Ne encoches étant agencées dans le corps cylindrique (31), dans lequel chaque bobine (32) du bobinage comporte au moins une spire électriquement conductrice, les spires étant agencées dans les encoches suivant un mode ondulé et selon un pas d'enroulement Yc et dans lequel le nombre d'encoches Ne et le pas d'enroulement Yc sont des nombres entiers et premiers entre eux.

2. Dispositif (18) selon la revendication 1, dans lequel le bobinage (30) du rotor (28) de l'excitatrice (20) est propre à former une pluralité de pôles magnétiques lorsqu'il est parcouru par un courant, le nombre P de pôles magnétiques étant un nombre pair, de préférence égal à 2 ou 4, de préférence encore égal à 4.

3. Dispositif (18) selon l'une quelconque des revendications précédentes, dans lequel le bobinage (30) du rotor (28) de l'excitatrice (20) comporte une pluralité de bobines (32) connectées entre elles en polygone.

4. Dispositif (18) selon l'une quelconque des revendications précédentes, dans lequel le redresseur (22) comporte une première (M) et une deuxième (N) bornes de sortie et un pont de diodes comprenant q branches (34) connectées en parallèle entre les première (M) et deuxième (N) bornes de sortie, chaque branche (34) comportant une première diode (D1 p, D2p, D3p, D4p, D5p, D6p, D7p) et une deuxième diode (D1 n, D2n, D3n, D4n, D5n, D6n, D7n).

5. Dispositif (18) selon la revendication 4, dans lequel l'anode de la première diode (D1 p, D2p, D3p, D4p, D5p, D6p, D7p) est connectée à une borne de sortie (A, B, C, D, E, F, G) de l'excitatrice (20) correspondant à une phase respective, la cathode de la première diode (D1 p, D2p, D3p, D4p, D5p, D6p, D7p) étant connectée à la première borne de sortie (M) du redresseur (22), et dans lequel la cathode de la deuxième diode (D1n, D2n, D3n, D4n, D5n, D6n, D7n) est connectée à ladite borne de sortie (A, B, C, D, E, F, G) de l'excitatrice (20) correspondant à la phase respective, l'anode de la deuxième diode (D1n, D2n, D3n, D4n, D5n, D6n, D7n) étant connectée à la deuxième borne de sortie (N) du redresseur (22).

6. Dispositif (18) selon la revendication 4 ou 5, dans lequel le redresseur (22) comporte en outre, pour chaque diode (D1p à D7p, D1n à D7n), un fusible (70) connecté en série entre la diode (D1 p à D7p, D1 n à D7n) et la borne de sortie (A, B, C, D, E, F, G) correspondante de l'excitatrice (20).

7. Système d'entraînement (10) comportant une machine tournante électrique synchrone (12) et un dispositif (18) d'alimentation en courant continu d'un bobinage du rotor (16) de la machine électrique synchrone (12), **caractérisé en ce que** le dispositif d'alimentation (18) est conforme à l'une quelconque des revendications précédentes.

8. Système d'entraînement (10) selon la revendication 7, dans lequel le rotor (16) de la machine synchrone (12) et le rotor (28) de l'excitatrice (20) sont solidaires d'un arbre (17, 29) commun.

**Patentansprüche**

1. Vorrichtung (18) zur Versorgung mit Gleichstrom einer Wicklung des Rotors (16) einer elektrischen, rotierenden Synchronmaschine (12) vom Typ, der umfasst:

   - einen Erreger (20), der einen Stator (24), der elektrisch mit einer Eingangsversorgung (26) verbunden ist, und einen mit einer Wicklung (30) versehenen Rotor (28) aufweist,
   - einem Gleichrichter (22), der elektrisch am Ausgang der Wicklung (30) des Rotors (28) des Erregers (20) zur Versorgung des Rotors (16) der Synchronmaschine (12) verbunden ist,

   wobei der Erreger (20) eine elektrische Asynchronmaschine ist, die in der Lage ist, zu dem Gleichrichter (22) einen Ausgangswechselstrom, der q Phasen aufweist, zuzuführen,
   **dadurch gekennzeichnet, dass**
   die Eingangsversorgung (26) ein Spannungswechselrichter ist, der geeignet ist, einen mehrphasigen Wechselstrom zu liefern,
   die Anzahl q der Ausgangsphasen des Erregers (20) 7 oder 9, vorzugsweise 7, beträgt, und wobei
   der Rotor (28) des Erregers (20) einen zylindrischen Körper (31) und Ne Schlitze zur Aufnahme der Wicklung (30) aufweist, wobei die Ne Schlitze in dem zylindrischen Körper (31) angeordnet sind, wobei jede Spule (32) der Wicklung mindestens eine elektrisch leitende Windung aufweist, wobei die Windungen in den Schlitzen auf eine gewellte Weise und gemäß einem Wickelschritt Yc angeordnet sind, und wobei
   die Anzahl der Schlitze Ne und der Wickelschritt Yc ganze Zahlen und Primzahlen untereinander sind.

2. Vorrichtung (18) nach Anspruch 1, wobei die Wicklung (30) des Rotors (28) des Erregers (20) in der Lage ist, mehrere Magnetpole auszubilden, wenn sie von einem Strom durchflossen wird, wobei die Anzahl P der Magnetpole eine gerade Zahl, bevorzugt gleich 2 oder 4, besonders bevorzugt gleich 4, ist.

3. Vorrichtung (18) nach einem der vorhergehenden Ansprüche, wobei die Wicklung (30) des Rotors (28) des Erregers (20) mehrere Wicklungen (32) aufweist, die als Polygon miteinander verbunden sind.

4. Vorrichtung (18) nach einem der vorhergehenden Ansprüche, wobei der Gleichrichter (22) einen ersten (M) und einen zweiten (N) Ausgangsanschluss und eine Diodenbrücke aufweist, die q Zweige (34) umfasst, die parallel zwischen den ersten (M) und den zweiten (N) Ausgangsanschluss verbunden sind, wobei jeder Zweig (34) eine erste Diode (D1p, D2p, D3p, D4p, D5p, D6p, D7p) und eine zweite Diode (D1n, D2n, D3n, D4n, D5n, D6n, D7n) aufweist.

5. Vorrichtung (18) nach Anspruch 4, wobei die Anode der ersten Diode (D1p, D2p, D3p, D4p, D5p, D6p, D7p) mit einem Ausgangsanschluss (A, B, C, D, E, F, G) des Erregers (20) verbunden ist, der einer jeweiligen Phase entspricht, wobei die Kathode der ersten Diode (D1p, D2p, D3p, D4p, D5p, D6p, D7p) mit dem ersten Ausgangsanschluss (M) des Gleichrichters (22) verbunden ist, und wobei die Kathode der zweiten Diode (D1n, D2n, D3n, D4n, D5n, D6n, D7n) mit dem Ausgangsanschluss (A, B, C, D, E, F, G) des Erregers (20) verbunden ist, der der jeweiligen Phase entspricht, wobei die Anode der zweiten Diode (D1n, D2n, D3n, D4n, D5n, D6n, D7n) mit dem zweiten Ausgangsanschluss (N) des Gleichrichters (22) verbunden ist.

6. Vorrichtung (18) nach Anspruch 4 oder 5, wobei der Gleichrichter (22) ferner für jede Diode (D1p bis D7p, D1n bis D7n) eine Sicherung (70) aufweist, die in Reihe zwischen der Diode (D1p bis D7p, D1n bis D7n) und dem entsprechenden Ausgangsanschluss (A, B, C, D, E, F, G) des Erregers (20) verbunden ist.

7. Antriebssystem (10), aufweisend eine elektrische, rotierende Synchronmaschine (12) und eine Vorrichtung (18) zur Versorgung mit Gleichstrom einer Wicklung des Rotors (16) der elektrischen Synchronmaschine (12), **dadurch gekennzeichnet, dass** die Vorrichtung zur Versorgung (18) einem der vorhergehenden Ansprüche entspricht.

8. Antriebssystem (10) nach Anspruch 7, wobei der Rotor (16) der Synchronmaschine (12) und der Rotor (28) des Erregers (20) mit einer gemeinsamen Welle (17, 29) fest verbunden sind.

**Claims**

1. Device (18) for supplying direct current to a rotor (16) winding of a synchronous electric rotating machine (12), of the type comprising:

   - an exciter (20) including a stator (24) electrically connected to the input supply (26), and a rotor (28) provided with a winding (30),
   - a rectifier (22) electrically connected to the output of the winding (30) of the rotor (28) of the exciter (20) for supplying power to the rotor (16) of the synchronous machine (12),

   the exciter (20) being an asynchronous electric machine suitable for delivering an alternating output current having q phases, to the rectifier (22),
   **characterised in that** an input supply (26) is a voltage inverter capable of delivering a polyphase alternating current, the number q of phases of the output current of the exciter (20) is equal to 7 or 9, preferably equal to 7, and wherein the rotor (28) of the exciter (20) includes a cylindrical body (31) and Ne notches for receiving the winding (30), the Ne notches being arranged within the cylindrical body (31), wherein each coil (32) of the winding includes at least one electrically conducting coil turn, the coil turns being arranged within the notches according to a wave mode and according to a winding pitch Yc and wherein the number of notches Ne and the winding pitch Yc are integers and coprime.

2. Device (18) according to claim 1, wherein the winding (30) of the rotor (28) of the exciter (20) is suitable for forming a plurality of magnetic poles when it is energised, the number P of magnetic poles being an even number, preferably equal to 2 or 4, more preferably equal to 4.

3. Device (18) according to any of the preceding claims, wherein the winding (30) of the rotor (28) of the exciter (20) includes a plurality of coils (32) connected to one another in a polygon shape.

4. Device (18) according to any of the preceding claims, wherein the rectifier (22) includes a first (M) and a second (N) output terminals and a diode bridge comprising q branches (34) connected in parallel between the first (M) and second (N) output terminals, each branch (34) including a first diode (D1 p, D2p, D3p, D4p, D5p, D6p, D7p) and a second diode (D1 n, D2n, D3n, D4n, D5n, D6n, D7n).

5. Device (18) according to claim 4, wherein the anode of the first diode (D1 p, D2p, D3p, D4p, D5p, D6p, D7p) is connected to an output terminal (A, B, C, D, E, F, G) of the exciter (20) corresponding to a respective phase, the cathode of the first diode (D1 p, D2p, D3p, D4p, D5p, D6p, D7p) being connected to the first output terminal (M) of the rectifier (22), and wherein the cathode of the second diode (D1n, D2n, D3n, D4n, D5n, D6n, D7n) is connected to said output terminal (A, B, C, D, E, F, G) of the exciter (20) corresponding to the respective phase, the anode of the second diode (D1n, D2n, D3n, D4n, D5n, D6n, D7n) being connected to the second output terminal (N) of the rectifier (22).

6. Device (18) according to claim 4 or 5, wherein the rectifier (22) further includes, for each diode (D1p to D7p, D1n to D7n), a fuse (70) connected in series between the diode (D1 p to D7p, D1 n to D7n) and the corresponding output terminal (A, B, C, D, E, F, G) of the exciter (20).

7. Drive system (10) including a synchronous electric rotating machine (12) and a device (18) for supplying direct current to a winding of the rotor (16) of the synchronous electric machine (12), **characterised in that** the supply device (18) is as claimed in any of the preceding claims.

8. Drive system (10) according to claim 7, wherein the rotor (16) of the synchronous machine (12) and the rotor (28) of the exciter (20) are integral with a joint shaft (17, 29).

# FIG.1

<u>FIG.2A</u>

FIG.2B

EP 2 302 768 B1

Choix du courant nominal d'excitation ___ 110

Tension nominale redressée ___ 120

Nombre de phases ___ 130

Nombre de diodes ___ 140

Type de diodes ___ 150

Couplage des phases rotoriques
(étoile ou polygone) ___ 160

Nombre de pôles ___ 170

Puissance à fournir au stator ___ 180

FIG.3

$$\frac{\pi}{q} + \mu < \omega t < 0$$

$$0 < \omega t < \mu$$

$$\mu < \omega t < \frac{\pi}{q}$$

**FIG.4**

D2p    D6p    D3p    D7p    D4p    D1p    D5p    D2p

D4n    D1n    D5n    D2n    D6n    D3n    D7n

## FIG.5A

D1p    D5p    D2p    D6p    D3p    D7p    D4p

D1p

D6n    D3n    D7n    D4n    D1n    D5n    D2n    D6n

## FIG.5B

FIG.5C

FIG.6

FIG.7

FIG.8

FIG.9

**FIG.10**

22

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 1223941
- EP 1708342 A